# EUROPEAN PATENT APPLICATION

(11) **EP 4 554 076 A1**
(43) Date of publication of application: **14.05.2025**
(21) Application number: 23835170.4
(22) Date of filing: 23.05.2023
(51) Int. Cl.: H02P 5/46

(54) **MOTOR DRIVE DEVICE, CONTROL METHOD, AND PROGRAM**

(30) Priority: 06.07.2022 JP 2022109301
(71) Applicant: Panasonic Intellectual Property Management Co., Ltd., Kadoma-shi, Osaka 571-0057 (JP)
(72) Inventor: HOSOKAWA, Tomoya, Kadoma-shi, Osaka 571-0057 (JP)
(74) Representative: SSM Sandmair
(86) International application number: PCT/JP2023/019215
(87) International publication number: WO 2024/009634

(57) **Abstract**

A decrease in reliability due to heat during operation of a dynamic brake is prevented. Motor drive device (1) includes first controller (11), second controller (12), and dynamic brake (14). First controller (11) controls first motor (2). Second controller (12) controls second motor (5). Second motor (5) cools at least one of heat generator (A1) and heat radiator (B1). Dynamic brake (14), which includes resistors (14a) to (14c) connected among terminals (P1) to (P3) of first motor (2), short-circuits terminals (P1) to (P3) to cause resistors (14a) to (14c) to consume kinetic energy of first motor (2) to stop first motor (2). While first motor (2) is controlled to be in a standby state, second controller (12) changes the rotation speed of second motor (5) according to the rotation speed of first motor (2). Heat generator (A1) includes resistors (14a) to (14c).

## Description

### TECHNICAL FIELD

The present disclosure generally relates to a motor drive device, a control method, and a program, more particularly, the present disclosure relates to a motor drive device including a dynamic brake, a method for controlling the motor drive device, and a program.

### BACKGROUND ART

PTL 1 discloses a motor drive device that drives a motor attached to a machine tool. The motor drive device includes a motor that drives a radiator that radiates heat of a heat generator of the motor drive device or a cooling fan for cooling the inside of the motor drive device, and a motor current detector that detects a current for controlling the motor. The motor drive device further includes an estimated-calorific-value calculator that calculates an estimated calorific value inside the heat generator or the motor drive device on the basis of current information obtained from the motor current detector, and a motor power-supply-voltage adjustment part that controls a rotation speed of the motor according to the estimated calorific value.

### Citation List

### Patent Literature

PTL 1: Unexamined Japanese Patent Publication No. 2011-88268

### SUMMARY OF THE INVENTION

There is a motor drive device including a dynamic brake that causes a resistor to consume heat of kinetic energy of a motor (first motor) to stop the motor. In the motor drive device, the dynamic brake is operated to stop the motor when the motor is controlled to be in a standby state, in order to secure the reliability of the entire device. When the motor is controlled to be in the standby state, the motor may rotate due to an external force, and the power generation energy generated on such an occasion is consumed by the resistor of the dynamic brake, so that the resistor is required to be cooled. If the technique for controlling the rotation speed of the motor (second motor) disclosed in PTL 1 is applied to the motor drive device including the dynamic brake, however, the estimated calorific value may be too small in the situation where the motor moves due to the external force, because of the fact that the current for controlling the motor detected by the motor current detector is zero. This can lead to a situation that the motor does not operate in the standby state, and as a result, the reliability of the motor drive device may decrease.

The present disclosure has been made in view of the above circumstances, and an object of the present disclosure is to provide a motor drive device, a control method, and a program for preventing a decrease in reliability due to heat generated by operation of a dynamic brake.

A motor drive device according to one aspect of the present disclosure includes a heat generator, a first controller, a second controller, and a dynamic brake in an inside of the motor drive device. The heat generator generates heat due to rotation of the first motor. The first controller drives and controls the first motor. The second controller drives and controls the second motor. The second motor cools the inside. The dynamic brake includes a resistor electrically connected between terminals of the first motor, and is configured to short-circuit the terminals to cause the resistor to consume heat of kinetic energy of the first motor to stop the first motor. The second controller controls a rotation speed of the second motor to change according to a rotation speed of the first motor while the first motor is controlled to be in a standby state. The heat generator includes the resistor.

A control method according to another aspect of the present disclosure is a method for controlling a motor drive device. The control method includes a first control step, a second control step, and a stop control step. In the first control step, a first motor is driven and controlled. In the second control step, a second motor is driven and controlled. The second motor cools at least one of a heat generator that generates heat due to the rotation of the first motor and a heat radiator that radiates the heat of the heat generator. In the stop control step, a dynamic brake, which includes a resistor electrically connected between terminals of the first motor, short-circuits the terminals to cause the resistor to consume heat of kinetic energy of the first motor to stop the first motor. In the second control step, a rotation speed of the second motor is controlled to change according to a rotation speed of the first motor, while the first motor is controlled to be in the standby state. The heat generator includes the resistor.

A program according to another aspect of the present disclosure is a program for causing one or more processors to execute the control method described above.

The present disclosure provides an advantage that a decrease in reliability due to heat generated by the operation of the dynamic brake can be prevented.

### BRIEF DESCRIPTION OF THE DRAWINGS

Fig. 1 is a schematic block configuration diagram of an entire motor control system including a motor drive device according to an exemplary embodiment.
Fig. 2 is a characteristic diagram for describing an operation related to drive control of a second motor (fan motor) of the motor drive device according to the exemplary embodiment.
Fig. 3 is a characteristic diagram for describing an operation related to drive control of a second motor (fan motor) in a modification of the motor drive device according to the exemplary embodiment.

### DESCRIPTION OF EMBODIMENT

### (Outline)

Hereinafter, motor drive devices according to an exemplary embodiment and a modification will be described with reference to the drawings. However, the exemplary embodiment and the modification are merely one of various exemplary embodiments of the present disclosure. In addition, the exemplary embodiment and the modification can be variously changed according to the design and the like as long as an object of the present disclosure can be achieved. In addition, the configuration of the modification can be appropriately combined.

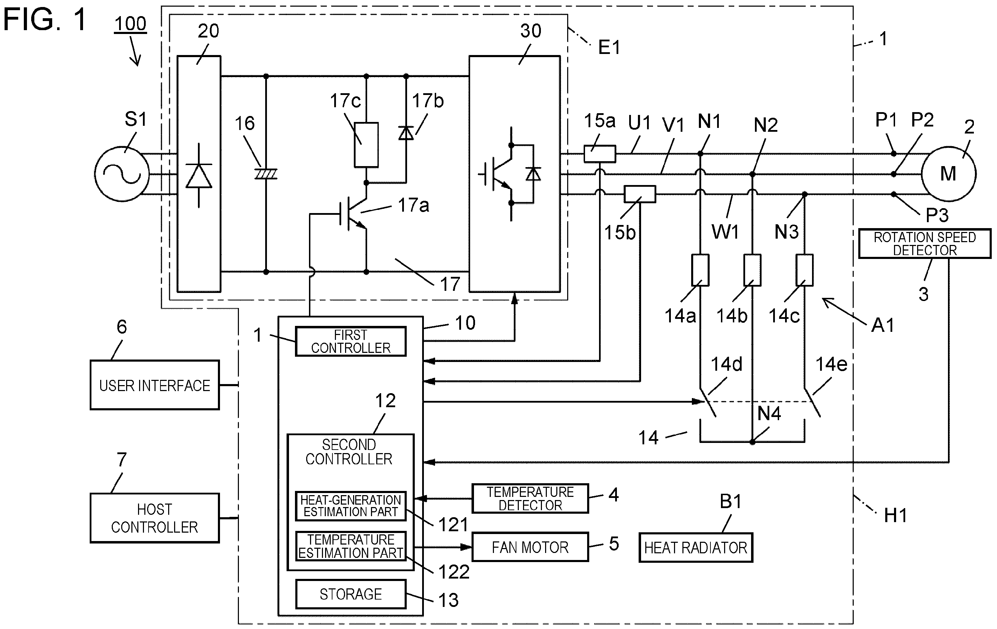

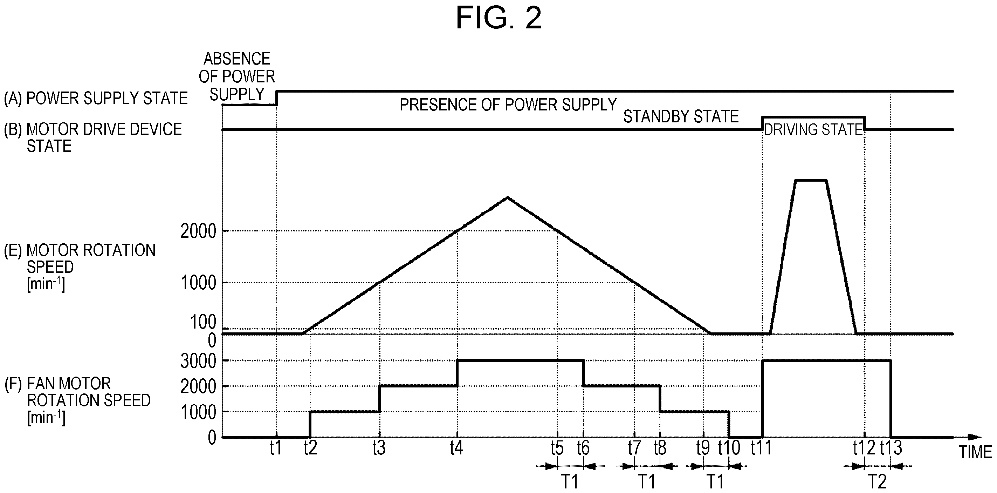

The drawings described in the following exemplary embodiment and modification are merely schematic views, and ratios in size and thickness of components do not always reflect actual dimensional ratios. Fig. 1 is a schematic block configuration diagram of an entire motor control system including motor drive device 1 according to an exemplary embodiment. Fig. 2 is a characteristic diagram for describing an operation related to drive control of second motor (fan motor) 5 in motor drive device 1.

As shown in Fig. 1, motor drive device 1 according to one aspect is a device configured to drive and control an operation (rotation operation) of first motor 2 (servomotor). First motor 2 (servomotor) is a rotary motor. First motor 2 includes, for example, a stator around which windings of three phases (U-phase, V-phase, W-phase) are wound.

As illustrated in Fig. 1, motor drive device 1 includes first controller 11, second controller 12, and dynamic brake 14.

First controller 11 drives and controls first motor 2. Second controller 12 drives and controls second motor 5. Second motor 5 is, for example, a fan motor (the term "fan motor" is used in the figure) disposed to cool the inside of motor drive device 1 (the inside of housing H1). The fan motor is a motor including a fan. In particular, second motor 5 cools at least one of heat generator A1 that generates heat due to the rotation of first motor 2 and heat radiator B1 that radiates the heat of heat generator A1.

Dynamic brake 14 includes resistors (for example, first resistor 14a, second resistor 14b, and third resistor 14c) electrically connected to terminals (for example, first terminal P1, second terminal P2, and third terminal P3 corresponding to respective ones of the three phases) of first motor 2. Dynamic brake 14 short-circuits the terminals (first terminal P1 to third terminal P3) of first motor 2 to cause the resistors (first resistor 14a to third resistor 14c) to consume heat of the kinetic energy of first motor 2 to stop first motor 2.

When first motor 2 is controlled to be in the standby state, second controller 12 controls the rotation speed of second motor 5 to change according to the rotation speed of first motor 2. Heat generator A1 includes at least resistors (first resistor 14a to third resistor 14c). Note that the rotation speed of a rotating body that rotates about a certain axis by 360° per minute is 1 [min⁻¹].

In the following description, the three resistors (first resistor 14a to third resistor 14c) may be abbreviated as "resistors (14a to 14c)", and the three terminals (first terminal P1 to third terminal P3) may be abbreviated as "terminals (P1 to P3)". However, the description "resistors (14a to 14c)" is not intended to limit the number of resistors to three. Similarly, the description "terminals (P1 to P3)" is not intended to limit the number of terminals to three.

In the following description, dynamic brake 14 may be abbreviated as DB 14.

Heat generator A1 may include, in addition to resistors (14a to 14c) of DB 14, processor 10, power converter E1, and the like housed in housing H1 of motor drive device 1. Heat radiator B1 is assumed to be, for example, a heatsink, but housing H1 itself may also be included as a part of heat radiator B1.

Incidentally, when first motor 2 is controlled to be in a standby state, first motor 2 may rotate due to an external force, and power generation energy generated by the rotation of first motor 2 is consumed by resistors (14a to 14c) of DB 14, so that resistors (14a to 14c) are required to be cooled. The type of the external force varies depending on the situation where first motor 2 is applied. For example, it is assumed that two first motors 2 are each disposed at a corresponding one of a start point and an end point of a conveyance apparatus such as a belt conveyor in order to drive the conveyance apparatus. Normally, output shafts of first motors 2 rotate in an interlocked manner and thereby the belt of the conveyance apparatus is moved. However, for example, there may be a situation where one of first motors 2 is not driven (standby state) whereas the other one of first motors 2 is driven to move the belt, in case of occurrence of control abnormality, failure, or the like, or a predetermined command such as a test operation command. In such a situation, the one of first motors 2 receives an external force from the other one of first motors 2 via the belt and rotates without regard to the standby state.

According to motor drive device 1 described above, the rotation speed of second motor 5 is changed according to the rotation speed of first motor 2, when first motor 2 is controlled to be in the standby state. Therefore, even when first motor 2 is rotated by an external force and resistors (14a to 14c) of DB 14 generate heat, heat generator A1 including resistors (14a to 14c) or heat radiator B1 is likely to be appropriately cooled by second motor 5. As a result, motor drive device 1 provides an advantage that a decrease in reliability due to heat generated by the operation of DB 14 can be prevented.

A control method according to another aspect is a method for controlling motor drive device 1. The control method includes a first control step, a second control step, and a stop control step. In the first control step, first motor 2 is driven and controlled. In the second control step, second motor 5 is driven and controlled. Second motor 5 cools at least one of heat generator A1 and heat radiator B1 described above. In the stop control step, DB 14 described above short-circuits terminals (P1 to P3) to cause resistors (14a to 14c) to consume heat of the kinetic energy of first motor 2 to stop first motor 2. In the second control step, the rotation speed of second motor 5 is controlled to change according to the rotation speed of first motor 2, when first motor 2 is controlled to be in the standby state. Heat generator A1 includes resistors (14a to 14c). According to this configuration, it is possible to provide a control method capable of preventing a decrease in reliability due to heat generated by the operation of DB 14. This control method is used on a computer system (motor drive device 1). That is, this control method can also be embodied by a program. A program according to according to one aspect is a program for causing one or more processors to execute the control method described above.

### (Details)

Hereinafter, the entire system (motor control system 100) including motor drive device 1 according to the present exemplary embodiment and a peripheral configuration of the system will be described in detail with reference to Fig. 1.

Motor control system 100 can be introduced into a facility such as a factory, for example. As shown in Fig. 1, the peripheral configuration of motor control system 100 here includes power source S1 (for example, commercial AC power source), first motor 2 (servomotor), and rotation speed detector 3. The peripheral configuration further includes user interface 6 (a display monitor, an operation device, and the like) for input of various settings and monitoring of operations related to motor drive device 1. The peripheral configuration further includes host controller 7 that transmits a control signal to motor drive device 1. The peripheral configuration may further include an external server or the like connected to motor drive device 1, host controller 7, and the like so as to be able to communicate therewith in a wired or wireless manner. The external server may be installed inside the facility or outside the facility. At least a part of the peripheral configuration may be included in the configuration of motor drive device 1.

As described above, first motor 2 is a rotary motor. First motor 2 has an output shaft, and rotates the output shaft under the control by motor drive device 1. First motor 2 constitutes a drive system together with a mechanical mechanism. The mechanical mechanism is not particularly limited, and is, for example, a ball screw mechanism, a gear mechanism, a belt mechanism, or the like. The mechanical mechanism is coupled to the output shaft of first motor 2. The mechanical mechanism is powered by first motor 2. For example, in a case where a plurality of first motors 2 are applied to a conveyance apparatus such as a belt conveyor in a facility such as a factory, the belt rotates in response to the rotation of the output shaft of each first motor 2 via the mechanical mechanism, and whereby a plurality of products, parts, or the like placed on the belt is sequentially automatically conveyed.

First motor 2 is, for example, a three-phase brushless motor, and includes a stator in which windings of three phases are wound. Specifically, first motor 2 includes a stator in which windings of U-phase, V-phase, and W-phase are wound around a stator core, and a rotor having a permanent magnet. As illustrated in Fig. 1, first motor 2 includes first terminal P1 to third terminal P3 corresponding to respective input terminals of three phases. The rotor is rotated by a drive current that flows in response to application of a drive voltage generated by motor drive device 1 to each of first terminal P1 to third terminal P3.

Rotation speed detector 3 includes an encoder and the like, and detects the rotation rate per unit time (in other words, rotation speed) of first motor 2 based on the rotational position of first motor 2. Rotation speed detector 3 is electrically connected to motor drive device 1. Rotation speed detector 3 outputs a detection signal (electric signal) including a detected value to motor drive device 1. Based on the detection signal from rotation speed detector 3 and the control signal from host controller 7, motor drive device 1 controls the operation of first motor 2 so as to execute an operation of predetermined work (for example, conveyance work).

Host controller 7 includes, for example, a programmable logic controller or the like, and controls motor drive device 1 by an operation command or the like. Host controller 7 and motor drive device 1 are communicably connected via a control bus line or the like. An operation command from host controller 7 is transmitted to motor drive device 1, and information from motor drive device 1 is transmitted to host controller 7.

Specifically, host controller 7 outputs a control signal to motor drive device 1, thereby controlling the operations of motor drive device 1 and first motor 2. The control signal includes data and the like for designating the position and operation of a movable portion (load) in the mechanical mechanism. Motor drive device 1 determines control values for the drive system (first motor 2 and the mechanical mechanism) according to the control signal and the detection signal from rotation speed detector 3. The control values include, for example, a rotation-speed command value, a rotation-angle command value, and a torque command value for first motor 2. Motor drive device 1 adjusts the power supplied to first motor 2 based on the determined control values, thereby controlling first motor 2. Motor drive device 1 transmits the result of control of first motor 2 to host controller 7.

As illustrated in Fig. 1, motor drive device 1 includes power converter E1, processor 10, dynamic brake (DB) 14, the pair of current detectors 15a, 15b, second motor (fan motor) 5, and heat radiator B 1. Motor drive device 1 further includes housing H1 and temperature detector 4.

Power converter E1 includes rectifier 20 that rectifies AC power supplied from power source S1 (for example, a commercial AC power source), and smoothing capacitor 16 that smooths the power output from rectifier 20.

Power converter E1 further includes inverter 30. Inverter 30 is supplied with the smoothed DC power smoothed by smoothing capacitor 16. Inverter 30 includes a plurality of semiconductor switching elements that perform switching operations. Specifically, inverter 30 includes a high-speed power switching element such as an insulated gate bipolar transistor (IGBT) or a metal oxide semiconductor field effect transistor (MOSFET), and a power conversion element such as a diode.

In inverter 30, the plurality of semiconductor switching elements are PWM-controlled by a pulse width modulation (PWM) signal output from processor 10. As a result, the smoothed DC power is converted into three-phase AC power including a U phase, a V phase, and a W phase. Inverter 30 drives first motor 2 by supplying the converted three-phase AC power to first motor 2.

The current of the U-phase AC component (U-phase current) is supplied from first terminal P1 to first motor 2 through power supply wire U1. The current of the V-phase AC component (V-phase current) is supplied from second terminal P2 to first motor 2 through power supply wire V1. The current of the W-phase AC component (W-phase current) is supplied from third terminal P3 to first motor 2 through power supply wire W1.

In addition, power converter E1 includes regenerative circuit 17 that consumes regenerative power supplied from first motor 2 via inverter 30. Regenerative circuit 17 is provided in a previous stage with respect to inverter 30. Regenerative circuit 17 includes semiconductor switching element 17a, diode 17b, and regenerative resistor 17c. A series circuit of semiconductor switching element 17a and regenerative resistor 17c is connected in parallel with smoothing capacitor 16. Diode 17b is connected in parallel with regenerative resistor 17c. Semiconductor switching element 17a causes a current to flow through regenerative resistor 17c by being turned on under control by processor 10 and cause regenerative resistor 17c to consume regenerative power.

Current detector 15a is disposed on power supply wire U1 in order to detect a drive current (U-phase current) flowing for driving and controlling first motor 2. Current detector 15a is disposed between inverter 30 and connection node N1 that connects first resistor 14a of DB 14 and power supply wire U1.

Current detector 15b is disposed on power supply wire W1 in order to detect a drive current (W-phase current) flowing for driving and controlling first motor 2. Current detector 15b is disposed between inverter 30 and connection node N3 that connects third resistor 14c of DB 14 and power supply wire W1.

A shunt resistor is used as current detector 15a, 15b in the case where the motor current is small, for example. In the case where the motor current is especially large, the current is converted into a value of several thousandth by current transfer (CT), and the output current from the CT is detected by the shunt resistor. A current detection signal output from each of current detectors 15a, 15b is supplied to processor 10.

Dynamic brake (DB) 14 includes three resistors (first resistor 14a, second resistor 14b, and third resistor 14c) electrically connected to first terminal P1 to third terminal P3 of first motor 2, and two switches 14d, 14e.

First resistor 14a and switch 14d form a series circuit. First resistor 14a has a first end electrically connected to power supply wire U1 via connection node N1, and has a second end electrically connected to a first end of switch 14d.

Third resistor 14c and switch 14e form a series circuit. Third resistor 14c has a first end electrically connected to power supply wire W1 via connection node N3, and has a second end electrically connected to a first end of switch 14e.

Second resistor 14b has a first end electrically connected to power supply wire V1 via connection node N2, and has a second end electrically connected to a second end of switch 14d and a second end of switch 14e via connection node N4.

Switch 14d, 14e includes, for example, a transistor or the like. Switch 14d, 14e is driven and controlled by processor 10 to short-circuit/open a corresponding winding of first motor 2. For example, when first motor 2 is rotating, the supply of the drive current to first motor 2 is stopped and switches 14d, 14e short-circuit the windings of first motor 2, so that the rotation of first motor 2 can be urgently stopped. That is, DB 14 short-circuits first terminal P1 to third terminal P3 of first motor 2 to cause first resistor 14a to third resistor 14c to consume heat of the kinetic energy (rotation energy) of first motor 2, thereby stopping first motor 2.

In particular, while first motor 2 is controlled to be in the standby state (operation state in which the supply of the drive current to first motor 2 is stopped), processor 10 stops the rotation of first motor 2 by operating DB 14 even if first motor 2 rotates by receiving an external force.

Processor 10 includes a computer system having one or more processors and memories. At least part of the function of processor 10 is implemented by the processor of the computer system executing a program recorded in the memory of the computer system. The program may be recorded in the memory, may be provided through a telecommunication line such as the Internet, or may be recorded in a non-transitory recording medium such as a memory card.

As illustrated in Fig. 1, processor 10 includes first controller 11, second controller 12, and storage 13.

First controller 11 is configured to drive and control first motor 2. Specifically, first controller 11 receives, from host controller 7, a control signal including operation command information for instruction on the position, the speed, the torque, and the like. First controller 11 also transmits various types of information in motor drive device 1 to host controller 7. First controller 11 has a communication function of transmitting such information, and also performs operation control by controlling the rotation operation of first motor 2 so that first motor 2 exhibits a predetermined movement.

Specific examples of processing executed by first controller 11 include the following control processing on the basis of feedback control. First controller 11 executes calculation for control on the basis of an operation command for instruction on the position from host controller 7 and rotation rate information (position information) from rotation speed detector 3, thereby generating a speed command. Next, first controller 11 calculates a motor speed value corresponding to the actual speed of first motor 2, and calculates a current command by speed control calculation from the motor speed and the speed command. Next, first controller 11 performs current control calculation from the U-phase motor current value and the W-phase motor current value detected via the pair of current detectors 15a, 15b, respectively, and from the calculated current command, thereby calculating voltage commands for the respective phases. Then, first controller 11 outputs a U-phase voltage command value, a V-phase voltage command value, and a W-phase voltage command value as values for indicating U-phase, V-phase, and W-phase voltage commands. That is, first controller 11 performs torque calculation on the basis of the operation command from host controller 7, rotation rate information (position information) on first motor 2, and the values of the currents flowing through the windings of first motor 2, thereby calculating the voltage command values (three-phase voltage command values) for driving first motor 2.

First controller 11 also generates a PWM switching signal (PWM signal). First controller 11 generates a PWM signal of each phase by comparing a carrier signal of a triangular wave formed by, for example, an up/down counter with a voltage command value of a corresponding phase. First controller 11 supplies the generated PWM signal to inverter 30 of power converter E1. That is, first controller 11 performs PWM modulation by comparing the voltage command values (three-phase voltage command values) with the triangular wave, and outputs PWM signals (three-phase PWM switching signals).

Second controller 12 is configured to drive and control second motor 5. Second motor 5 is housed or held in housing H1 of motor drive device 1, and cools the inside of housing H1. In particular, second motor 5 cools at least one (for example, both) of heat generator A1 that generates heat due to the rotation of first motor 2 and heat radiator B1 that radiates the heat of heat generator A1. Second motor 5 is disposed to face at least one of heat generator A1 and heat radiator B1, and has an output shaft provided with a fan (blade) that rotates by the rotation of the output shaft of second motor 5, thereby heat generator A1 and heat radiator B1 are cooled. Heat generator A1 includes at least first resistor 14a to third resistor 14c of DB 14, and may further include processor 10, rectifier 20, inverter 30 (high-speed power switching element of IGBT), and the like housed in housing H1 of motor drive device 1. Heat radiator B1 is, for example, a heat sink attached to dissipate heat of processor 10, rectifier 20, inverter 30 (high-speed power switching element of IGBT), and the like. Housing H1 itself may also be included as a part of heat radiator B 1.

Second motor 5 is assumed to be, for example, a brushless DC fan motor driven by a DC voltage, but the type of second motor 5 is not particularly limited. The rotation speed of second motor 5 can be changed under the control of second controller 12. That is, second controller 12 applies a drive voltage (DC voltage) according to the target rotation speed of second motor 5 to second motor 5, and causes a drive current to flow through second motor 5.

Second controller 12 is electrically connected to temperature detector 4 (temperature sensor) disposed in housing H1, and receives a detection signal from temperature detector 4. Second controller 12 includes temperature estimation part 122 (see Fig. 1) that estimates the ambient temperature of housing H1 on the basis of the result of detection by temperature detector 4.

Processor 10 monitors the ambient temperature by temperature estimation part 122. When the ambient temperature exceeds a threshold, processor 10 notifies the outside of the temperature rise. It is assumed that motor drive device 1 is used at an ambient temperature within a range from 0°C to 55°C.

While first motor 2 is controlled to be in the driving state (a state in which first controller 11 is supplying a drive current to first motor 2), second controller 12 drives and controls second motor 5 at a predetermined rotation speed, for example.

When first motor 2 is controlled to be in the standby state (a state in which first controller 11 stops the supply of the drive current to first motor 2), second controller 12 controls the rotation speed of second motor 5 to change according to the rotation speed of first motor 2. The "rotation speed of first motor 2" described herein corresponds to a rotation speed detected by rotation speed detector 3, for example. That is, second controller 12 changes the rotation speed of second motor 5 according to the rotation speed of first motor 2 detected by rotation speed detector 3.

In particular, in the present exemplary embodiment, second controller 12 calculates the calorific value of first resistor 14a to third resistor 14c of DB 14 from the rotation speed of first motor 2, thereby changing the rotation speed of second motor 5. That is, second controller 12 includes heat-generation estimation part 121 that estimates the calorific value of resistors (14a to 14c) of DB 14 based on the rotation speed of first motor 2 (see Fig. 1).

Second controller 12 changes the rotation speed of second motor 5 according to the calorific value of resistors (14a to 14c) of DB 14 estimated by heat-generation estimation part 121.

Second controller 12 may directly use the rotation speed of first motor 2 as a parameter for determining the rotation speed (target rotation speed) of second motor 5, but the calorific value of resistors (14a to 14c) of DB 14 varies depending on the resistance values thereof. Therefore, second controller 12 preferably includes heat-generation estimation part 121 to estimate the calorific value of resistors (14a to 14c), and uses the estimated calorific value as a parameter for determining the target rotation speed of second motor 5. Heat-generation estimation part 121 may calculate (estimate) the calorific value of resistors (14a to 14c) of DB 14 using a predetermined arithmetic expression stored in storage 13 based on the rotation speed of first motor 2 and the resistance values of resistors (14a to 14c) of DB 14. In addition, second controller 12 may calculate (determine) the target rotation speed of second motor 5 from the estimated calorific value using a predetermined arithmetic expression stored in storage 13. However, in the present exemplary embodiment, the target rotation speed of second motor 5 is determined using reference information (correspondence-relationship table) to be described later.

Storage 13 is an electrically rewritable nonvolatile semiconductor memory such as a flash memory. Storage 13 may be a memory of processor 10. Storage 13 stores reference information indicating a correspondence relationship of a plurality of target rotation speeds related to second motor 5 with respect to a plurality of rotation speeds (ranges) related to first motor 2 and a plurality of calorific values (ranges) related to resistors (14a to 14c) of DB 14. Table 1 below shows an example of the reference information (correspondence-relationship table).

**Table 1**

| During standby state First motor rotation speed [min⁻¹] | Resistor Estimated calorific value [W·s] | Second motor Target rotation speed [min⁻¹] |
|---|---|---|
| 0 to 100 | 1 | 0 |
| 100 to 1000 | 10 | 1000 |
| 1000 to 2000 | 20 | 2000 |
| 2000 or more | 20 or more | 3000 |

Second controller 12 refers to the reference information as shown in Table 1 stored in storage 13, and determines the calorific value of resistors (14a to 14c) and the target rotation speed of second motor 5 based on the rotation speed of first motor 2 detected by rotation speed detector 3.

That is, while first motor 2 is controlled to be in the standby state, second controller 12 determines one from the plurality of target rotation speeds of the reference information according to the calorific value of resistors (14a to 14c) estimated by heat-generation estimation part 121, and applies the one as the rotation speed of second motor 5.

Housing H1 is formed in, for example, a rectangular box shape. Housing H1 accommodates at least the first controller, second controller 12, and DB 14. In the present exemplary embodiment, housing H1 accommodates power converter E1, processor 10, DB 14, the pair of current detectors 15a, 15b, heat radiator B 1, and temperature detector 4 therein, and accommodates or holds second motor 5.

### (Operation of motor drive device)

Hereinafter, a series of flow of the control operation related to second motor 5 in motor drive device 1 will be described with reference to Fig. 2 and Table 1. The operation flow described below is merely an example, and therefore the processing order may be changed as appropriate, another piece of processing may be added as appropriate, and the processing may be partially omitted as appropriate.

Fig. 2 is a characteristic diagram illustrating temporal changes related to (A) a power supply state, (B) a motor drive device state, (E) a motor rotation speed [min⁻¹], and (F) a fan motor rotation speed (target rotation speed of second motor 5), with the horizontal axis representing time.

In Fig. 2, the supply from power source S1 to motor drive device 1 is switched from "absence" to "presence" at time point t1. That is, the power to motor drive device 1 is turned on at time point t1. First motor 2 of motor drive device 1 is controlled to be in a standby state at time point t1, and the standby state continues until time point t11. In the standby state, motor drive device 1 causes DB 14 to be kept in operation to stop rotation of first motor 2, and switches 14d, 14e keep the respective windings of first motor 2 short-circuited (execution of the stop control step). That is, when first motor 2 rotates due to an external force in the standby state, first resistor 14a to third resistor 14c generate heat.

In Fig. 2, first motor 2 starts to rotate by an external force slightly before time point t2, and as an example, the rotation speed of first motor 2 increases at a constant rate. In response to the start of rotation of first motor 2, heat of the kinetic energy of first motor 2 starts to be consumed by first resistor 14a to third resistor 14c.

Motor drive device 1 refers to the reference information (see Table 1) to determine the target rotation speed of second motor 5. The target rotation speed of second motor 5 remains 0 until time point t2 on the basis of the reference information, until which time point the detected rotation speed [min⁻¹] of first motor 2 is 0 or more and less than 100 (denoted by "0 to 100" in Table 1) and the estimated calorific value [W·s] is less than 1 (denoted by "1" in Table 1). That is, motor drive device 1 maintains second motor 5 stationary until time point t2.

At time point t2, the rotation speed of first motor 2 becomes 100 or more and the estimated calorific value becomes 1 or more, and motor drive device 1 changes the target rotation speed of second motor 5 to 1000 on the basis of the reference information to drive second motor 5. That is, motor drive device 1 drives and controls second motor 5 (execution of the second control step).

The target rotation speed of second motor 5 is maintained at 1000 from time point t2 until time point t3, during which the rotation speed of first motor 2 is 100 or more and less than 1000 (denoted by "100 to 1000" in Table 1) and the estimated calorific value is 1 or more and less than 10 (denoted by "10" in Table 1).

At time point t3, the rotation speed of first motor 2 becomes 1000 or more and the estimated calorific value becomes 10 or more, and motor drive device 1 changes the target rotation speed of second motor 5 to 2000 on the basis of the reference information.

The target rotation speed of second motor 5 is maintained at 2000 from time point t3 until time point t4, during which the rotation speed of first motor 2 is 1000 or more and less than 2000 (denoted by "1000 to 2000" in Table 1) and the estimated calorific value is 10 or more and less than 20 (denoted by "20" in Table 1).

At time point t4, the rotation speed of first motor 2 becomes 2000 or more and the estimated calorific value becomes 20 or more, and motor drive device 1 changes the target rotation speed of second motor 5 to 3000 on the basis of the reference information.

The target rotation speed of second motor 5 is maintained at 3000 from time point t4 until time point t5, during which the rotation speed of first motor 2 is 2000 or more and the estimated calorific value is 20 or more. The rotation speed of first motor 2 reaches a peak at a midpoint between time point t4 and time point t5, and thereafter, the rotation speed of first motor 2 decreases at a constant rate as an example. That is, first motor 2 starts to be turned into a stop state due to DB 14.

At time point t5, the rotation speed of first motor 2 falls below 2000, and the estimated calorific value falls below 20. However, second controller 12 of the present exemplary embodiment does not immediately change the target rotation speed of second motor 5 to 2000 even when the rotation speed of first motor 2 falls below 2000 (threshold). That is, while first motor 2 is controlled to be in the standby state, second controller 12 maintains the rotation speed of second motor 5 for certain period of time T1 even after the rotation speed of first motor 2 falls below a predetermined threshold (for example, 2000). Second controller 12 changes the rotation speed of second motor 5 on the basis of the reference information after the lapse of certain period of time T1. Certain period of time T1 is assumed to be, for example, several minutes to several tens of minutes, but is not particularly limited. In short, the target rotation speed of second motor 5 is maintained at 3000 from time point t4 until time point t6.

At time point t6, since certain period of time T1 has elapsed from time point t5, motor drive device 1 changes the target rotation speed of second motor 5 to 2000 on the basis of the reference information.

At time point t7, the rotation speed of first motor 2 falls below 1000, and the estimated calorific value falls below 10. However, second controller 12 of the present exemplary embodiment does not immediately change the target rotation speed of second motor 5 to 1000 even when the rotation speed of first motor 2 falls below 1000 (threshold). Also in this case, while first motor 2 is controlled to be in the standby state, second controller 12 maintains the rotation speed of second motor 5 for certain period of time T1 even after the rotation speed of first motor 2 falls below a predetermined threshold (for example, 1000). In short, the target rotation speed of second motor 5 is maintained at 2000 from time point t6 until time point t8.

At time point t8, since certain period of time T1 has elapsed from time point t7, motor drive device 1 changes the target rotation speed of second motor 5 to 1000 on the basis of the reference information.

At time point t9, the rotation speed of first motor 2 falls below 100, and the estimated calorific value falls below 1. However, second controller 12 of the present exemplary embodiment does not immediately change the target rotation speed of second motor 5 to 0 even when the rotation speed of first motor 2 falls below 100 (threshold). Also in this case, while first motor 2 is controlled to be in the standby state, second controller 12 maintains the rotation speed of second motor 5 for certain period of time T1 even after the rotation speed of first motor 2 falls below a predetermined threshold (for example, 100). In short, the target rotation speed of second motor 5 is maintained at 1000 from time point t8 until time point t10.

At time point t10, since certain period of time T1 has elapsed from time point t9, motor drive device 1 changes the target rotation speed of second motor 5 to 0 on the basis of the reference information.

In the above example, three predetermined thresholds (2000, 1000, 100) are set, but the number of predetermined thresholds is not particularly limited, and may be only one, for example.

In addition, the three kinds of certain period of time T1 for the three predetermined thresholds are set to have the same length, but may be set to have different lengths. In the case where the three kinds of certain period of time T1 are different from each other, the three kinds of certain period of time T1 may be set in a descending manner, such as 10 minutes, 5 minutes, and 1 minute, or may be set in an ascending manner, such as 1 minute, 5 minutes, and 10 minutes, for example, as the rotation speed of first motor 2 decreases.

Thereafter, motor drive device 1 controls first motor 2 to be switched from the standby state to the driving state at time point t11. That is, motor drive device 1 drives and controls first motor 2 (execution of the first control step).

In response to the switching of the operation state, second controller 12 drives and controls second motor 5 with the target rotation speed of second motor 5 set to 3000. In other words, after first motor 2 is controlled to be changed from the standby state to the driving state, second controller 12 controls second motor 5 at a predetermined rotation speed (3000 in the example of Fig. 2). Second controller 12 preferably changes the target rotation speed of second motor 5 in the standby state within a range of the predetermined rotation speed in the driving state (3000) or less. There is a slight time lag between time point t11, at which the standby state is switched to the driving state, and the rise of the rotation speed of first motor 2.

In the example illustrated in Fig. 2, motor drive device 1 controls the rotation speed of first motor 2 to be maintained at a constant value of 2000 or more for a predetermined period, and then to be lowered toward the end of the drive control (time point t12).

At time point t12, motor drive device 1 controls first motor 2 to be switched from the driving state to the standby state. Motor drive device 1 controls first motor 2 so that the rotation speed of first motor 2 reaches 0 slightly before time point t12 at which the state is switched to the standby state.

Here, second controller 12 of the present exemplary embodiment does not immediately change the target rotation speed of second motor 5 to 0 even after the rotation speed of first motor 2 becomes 0 and first motor 2 is controlled to be switched from the driving state to the standby state. That is, second controller 12 controls the rotation speed of second motor 5 to be maintained at a predetermined rotation speed (3000 in the example of Fig. 2) for specified period of time T2, even after first motor 2 is controlled to be changed from the driving state to the standby state. After the lapse of specified period of time T2, second controller 12 controls the rotation speed of second motor 5 to change according to the rotation speed of first motor 2. Specified period of time T2 is assumed to be, for example, several minutes to several tens of minutes, but is not particularly limited. The length of specified period of time T2 may be the same as or different from certain period of time T1. In short, the target rotation speed of second motor 5 is maintained at 3000 from time point t11 until time point t13.

At time point t13, since specified period of time T2 has elapsed from time point t12, motor drive device 1 changes the target rotation speed of second motor 5 to 0 on the basis of the reference information.

Thereafter, when first motor 2 rotates again by an external force, the rotation speed of second motor 5 is changed as explained in the description for time t1 to time t11.

### [Advantages]

According to motor drive device 1 of to the present exemplary embodiment, the rotation speed of second motor 5 is changed according to the rotation speed of first motor 2, while first motor 2 is controlled to be in the standby state. Therefore, even when first motor 2 rotates due to an external force and first resistor 14a to third resistor 14c of DB 14 generate heat, heat generator A1 and heat radiator B1 are likely to be appropriately cooled by second motor 5. Therefore, it is possible to prevent a decrease in reliability of motor drive device 1 due to heat generated by the operation of DB 14.

In addition, as compared with a case where second motor 5 is constantly driven and controlled at a constant rotation speed while first motor 2 is controlled to be in the standby state, unnecessary power consumption by second motor 5 is readily reduced, which also contributes to extending the life of second motor 5. In addition, noise of second motor 5 can be reduced as compared with the case where second motor 5 is constantly driven and controlled at a constant rotation speed while first motor 2 is controlled to be in the standby state.

In the present exemplary embodiment, the rotation speed of second motor 5 is changed according to the calorific value of first resistor 14a to third resistor 14c of DB 14, so that second motor 5 can be driven and controlled more reliably.

Furthermore, in the present exemplary embodiment, one of the plurality of target rotation speeds of the reference information is determined to be applied as the target rotation speed of second motor 5, so that second motor 5 can be driven and controlled more reliably.

In the present exemplary embodiment, certain period of time T1 is provided. Therefore, heat generator A1 including resistors (14a to 14c) of DB 14 and heat radiator B1 are likely to be sufficiently cooled by second motor 5. In addition, the rotation speed of second motor 5 is prevented from being frequently switched due to noise or the like while first motor 2 is rotating at a rotation speed near the predetermined threshold.

In the present exemplary embodiment, specified period of time T2 is provided. Therefore, the control system regarding the rotation speed of second motor 5 is switched after heat generator A1 and heat radiator B1 in the driving state are sufficiently cooled. That is, the control method (control mode) of second controller 12 includes a first control mode in which the rotation speed of second motor 5 is controlled at a predetermined rotation speed (3000 in Fig. 2) during the driving state, and a second control mode in which the rotation speed of second motor 5 is changed on the basis of the reference information during the standby state. In the present exemplary embodiment, the control mode is switched from the first control mode to the second control mode after the lapse of specified period of time T2. Therefore, the reliability of motor drive device 1 is further improved.

### (First modification)

Hereinafter, motor drive device 1 according to a modification (first modification) will be described in detail. In the following description, regarding the components of motor drive device 1 according to the first modification, the same reference numerals are given to components being substantially common to those of motor drive device 1 of the above-described exemplary embodiment, and the description thereof may be appropriately omitted.

Motor drive device 1 according to the first modification is different from motor drive device 1 of the above exemplary embodiment in the control of the rotation speed of second motor 5 in the second controller while first motor 2 is controlled to be in the standby state.

Specifically, while first motor 2 is controlled to be in the standby state, second controller 12 of the first modification changes the rotation speed of second motor 5 according to the calorific value of resistors (14a to 14c) estimated by heat-generation estimation part 121 and the result of detection by temperature detector 4. That is, according to the first modification, second controller 12 employs not only the estimated calorific value but also the result of detection by temperature detector 4 as a parameter for determining the target rotation speed of second motor 5.

The result of detection by temperature detector 4 (detected value) may be used as it is as a parameter. In the first modification, temperature estimation part 122 (see Fig. 1) estimates the ambient temperature of housing H1 from the value detected by temperature detector 4, and the ambient temperature of housing H1 is used as a parameter for determining the target rotation speed of second motor 5. That is, while first motor 2 is controlled to be in the standby state, second controller 12 changes the rotation speed of second motor 5 according to the calorific value of resistors (14a to 14c) estimated by heat-generation estimation part 121 and the ambient temperature estimated by temperature estimation part 122.

The calorific value of resistors (14a to 14c) may be calculated from the rotation speed of first motor 2 and resistance values of resistors (14a to 14c) using a predetermined arithmetic expression. The target rotation speed of second motor 5 may be calculated from the calorific value of resistors (14a to 14c) and the ambient temperature using a predetermined arithmetic expression. However, in the first modification, similarly to the above exemplary embodiment, the target rotation speed of second motor 5 is determined using reference information (correspondence-relationship table) to be described later.

Storage 13 of the first modification stores reference information indicating a correspondence relationship of a plurality of target rotation speeds related to second motor 5 with respect to a plurality of rotation speeds (ranges) related to first motor 2, a plurality of calorific values (ranges) related to resistors (14a to 14c), and a plurality of ambient temperatures (ranges). Table 2 below shows an example of the reference information (correspondence-relationship table) of the first modification.

**Table 2**

| During standby state First motor rotation speed [min⁻¹] | Resistor Estimated calorific value [W·s] | Estimated ambient temperature [°C] | Second motor Target rotation speed [min⁻¹] |
|---|---|---|---|
| 0 to 100 | 1 | 0 to 30 | 0 |
| | | 30 to 60 | 0 |
| 100 to 1000 | 10 | 0 to 30 | 500 |
| | | 30 to 60 | 1000 |
| 1000 to 2000 | 20 | 0 to 30 | 1000 |
| | | 30 to 60 | 2000 |
| 2000 or more | 20 or more | 0 to 30 | 2000 |
| | | 30 to 60 | 3000 |

Second controller 12 refers to the reference information as shown in Table 2 stored in storage 13 to determine the target rotation speed of second motor 5.

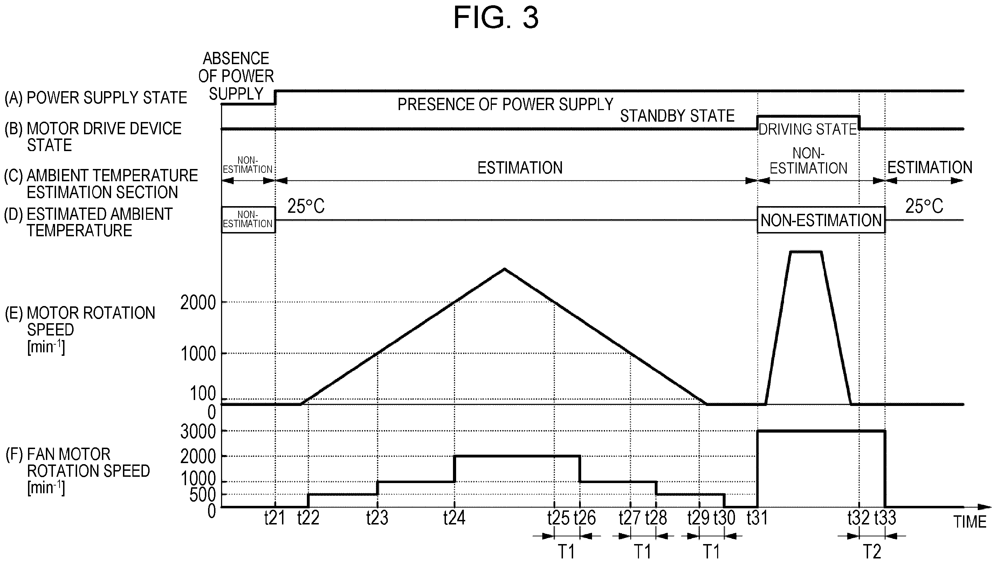

Hereinafter, a series of flow of the control operation related to second motor 5 in motor drive device 1 of the first modification will be described with reference to Fig. 3 and Table 2. The operation flow described below is merely an example, and therefore the processing order may be changed as appropriate, another piece of processing may be added as appropriate, and the processing may be partially omitted as appropriate.

Fig. 3 is a characteristic diagram illustrating temporal changes related to (A) a power supply state, (B) a motor drive device state, (C) an ambient temperature estimation section, (D) an estimated ambient temperature, (E) a motor rotation speed [min⁻¹], and (F) a second motor (target) rotation speed, with the horizontal axis representing time.

In Fig. 3, the supply from power source S1 to motor drive device 1 is switched from "absence" to "presence" at time point t21. That is, the power to motor drive device 1 is turned on at time point t21. First motor 2 of motor drive device 1 is controlled to be in a standby state at time point t21, and the standby state continues until time point t31. In the standby state, motor drive device 1 causes DB 14 to be kept in operation, and switches 14d, 14e keep the respective windings of first motor 2 short-circuited. That is, when first motor 2 rotates due to an external force in the standby state, first resistor 14a to third resistor 14c generate heat.

In the first modification, as illustrated in Fig. 3, a section indicated as "estimation" in (C) ambient temperature estimation section is set as a section in which motor drive device 1 estimates the ambient temperature. On the other hand, a section indicated as "non-estimation" in (C) ambient temperature estimation section is set as a section in which motor drive device 1 does not estimate the ambient temperature.

For example, in Fig. 3, the section from time point t21 until time point 31 is set as the "estimation" section, and the estimated ambient temperature of the section is 25°C.

In Fig. 3, first motor 2 starts to rotate by an external force slightly before time point t22, and as an example, the rotation speed of first motor 2 increases at a constant rate. In response to the start of rotation of first motor 2, heat of the kinetic energy of first motor 2 starts to be consumed by first resistor 14a to third resistor 14c.

Motor drive device 1 refers to the reference information (see Table 2) to determine the target rotation speed of second motor 5. The target rotation speed of second motor 5 remains 0 until time point t22 on the basis of the reference information, until which time point the rotation speed [min⁻¹] of first motor 2 is 0 or more and less than 100 (denoted by "0 to 100" in Table 2) and the estimated calorific value [W·s] is less than 1 (denoted by "1" in Table 2), at which time point the estimated ambient temperature is 25°C. That is, motor drive device 1 maintains second motor 5 stationary until time point t22.

As can be seen from Table 2, the reference information of first modification has separate ranges of the estimated ambient temperature, that is, a range of 0°C or more and less than 30°C (indicated by "0 to 30" in Table 2) and a range of 30°C or more and less than 60°C (indicated by "30 to 60" in Table 2) for each range of the estimated calorific value (each range of the motor rotation speed). The target rotation speed of second motor 5 is set for each range of the estimated ambient temperature.

At time point t22, the rotation speed of first motor 2 becomes 100 or more and the estimated calorific value becomes 1 or more (the estimated ambient temperature is 25°C), and motor drive device 1 changes the target rotation speed of second motor 5 to 500 on the basis of the reference information to drive and control second motor 5.

The target rotation speed of second motor 5 is maintained at 500 from time point t22 until time point t23, during which the rotation speed of first motor 2 is 100 or more and less than 1000 (denoted by "100 to 1000" in Table 2) and the estimated calorific value is 1 or more and less than 10 (denoted by "10" in Table 2).

At time point t23, the rotation speed of first motor 2 becomes 1000 or more and the estimated calorific value becomes 10 or more (the estimated ambient temperature is 25°C), and motor drive device 1 changes the target rotation speed of second motor 5 to 1000 on the basis of the reference information.

The target rotation speed of second motor 5 is maintained at 1000 from time point t23 until time point t24, during which the rotation speed of first motor 2 is 1000 or more and less than 2000 (denoted by "1000 to 2000" in Table 2) and the estimated calorific value is 10 or more and less than 20 (denoted by "20" in Table 2).

At time point t24, the rotation speed of first motor 2 becomes 2000 or more and the estimated calorific value becomes 20 or more (the estimated ambient temperature is 25°C), and motor drive device 1 changes the target rotation speed of second motor 5 to 2000 on the basis of the reference information.

The target rotation speed of second motor 5 is maintained at 2000 from time point t24 until time point t25, during which the rotation speed of first motor 2 is 2000 or more and the estimated calorific value is 20 or more. The rotation speed of first motor 2 reaches a peak at a midpoint between time point t24 and time point t25, and thereafter, the rotation speed of first motor 2 decreases at a constant rate as an example. That is, first motor 2 starts to be turned into a stop state due to DB 14.

At time point t25, the rotation speed of first motor 2 falls below 2000, and the estimated calorific value falls below 20 (the estimated ambient temperature is 25°C). However, second controller 12 does not immediately change the target rotation speed of second motor 5 to 1000 even when the rotation speed of first motor 2 falls below 2000 (threshold). That is, as described in the above exemplary embodiment, while first motor 2 is controlled to be in the standby state, second controller 12 maintains the rotation speed of second motor 5 for certain period of time T1 even after the rotation speed of first motor 2 falls below a predetermined threshold (2000). Second controller 12 changes the rotation speed of second motor 5 on the basis of the reference information after the lapse of certain period of time T1. In short, the target rotation speed of second motor 5 is maintained at 2000 from time point t24 until time point t26.

At time point t26, since certain period of time T1 has elapsed from time point t25, motor drive device 1 changes the target rotation speed of second motor 5 to 1000 on the basis of the reference information.

At time point t27, the rotation speed of first motor 2 falls below 1000, and the estimated calorific value falls below 10 (the estimated ambient temperature is 25°C). However, second controller 12 does not immediately change the target rotation speed of second motor 5 to 500 even when the rotation speed of first motor 2 falls below 1000 (threshold). Also in this case, while first motor 2 is controlled to be in the standby state, second controller 12 maintains the rotation speed of second motor 5 for certain period of time T1 even after the rotation speed of first motor 2 falls below a predetermined threshold

(1000). In short, the target rotation speed of second motor 5 is maintained at 1000 from time point t26 until time point t28.

At time point t28, since certain period of time T1 has elapsed from time point t27, motor drive device 1 changes the target rotation speed of second motor 5 to 500 on the basis of the reference information.

At time point t29, the rotation speed of first motor 2 falls below 100, and the estimated calorific value falls below 1 (the estimated ambient temperature is 25°C). However, second controller 12 does not immediately change the target rotation speed of second motor 5 to 0 even when the rotation speed of first motor 2 falls below 100 (threshold). Also in this case, while first motor 2 is controlled to be in the standby state, second controller 12 maintains the rotation speed of second motor 5 for certain period of time T1 even after the rotation speed of first motor 2 falls below a predetermined threshold

(100). In short, the target rotation speed of second motor 5 is maintained at 500 from time point t28 until time point t30.

At time point t30, since certain period of time T1 has elapsed from time point t29, motor drive device 1 changes the target rotation speed of second motor 5 to 0 on the basis of the reference information.

Thereafter, motor drive device 1 controls first motor 2 to be switched from the standby state to the driving state at time point t31. In response to the switching of the operation state, second controller 12 drives and controls second motor 5 with the target rotation speed of second motor 5 set to 3000. There is a slight time lag between time point t31, at which the operation state is switched, and the rise of the rotation speed of first motor 2.

Motor drive device 1 maintains the rotation speed of first motor 2 at a constant value of 2000 or more for a predetermined period, and then lowers the rotation speed of first motor 2 toward the end of the drive control (time point t32).

At time point t32, motor drive device 1 controls first motor 2 to be switched from the driving state to the standby state. Motor drive device 1 controls first motor 2 so that the rotation speed of first motor 2 reaches 0 before time point t32 at which the state is switched to the standby state.

Second controller 12 does not immediately change the target rotation speed of second motor 5 to 0 even after the rotation speed of first motor 2 becomes 0 and first motor 2 is controlled to be switched from the driving state to the standby state. That is, second controller 12 controls the rotation speed of second motor 5 to be maintained at a predetermined rotation speed (3000) for specified period of time T2, even after first motor 2 is controlled to be changed from the driving state to the standby state. After the lapse of specified period of time T2, second controller 12 controls the rotation speed of second motor 5 to change according to the rotation speed of first motor 2. In short, the target rotation speed of second motor 5 is maintained at 3000 from time point t31 until time point t33.

In the first modification, the section from time point t31 until time point t33 is set as the "non-estimation" section, and the estimated ambient temperature of the section is unknown. That is, specified period of time T2 is also included in the "non-estimation" section.

At time point t33, since specified period of time T2 has elapsed from time point t32, motor drive device 1 changes the target rotation speed of second motor 5 to 0 on the basis of the reference information (the estimated ambient temperature is 25°C).

Thereafter, when first motor 2 rotates again by an external force, the rotation speed of second motor 5 is changed as explained in the description for time t21 to time t31.

Also in the first modification, it is possible to prevent a decrease in reliability due to heat generated by the operation of DB 14. In particular, since the rotation speed of second motor 5 is changed with reference to the estimated ambient temperature of housing H1, second motor 5 can be more reliably driven and controlled.

### (Other modifications)

Functions similar to those of motor drive devices 1 according to the above-described exemplary embodiment and the first modification may be embodied by a control method, a computer program, a non-transitory recording medium on which the computer program is recorded, or the like.

Motor drive device 1 (particularly processor 10) of the present disclosure includes a computer system. The computer system mainly includes a processor and a memory as hardware. The processor executes a program recorded in the memory of the computer system, thereby implementing a function of motor drive device 1 (particularly processor 10) of the present disclosure. The program may be recorded in advance in the memory of the computer system, may be provided through a telecommunication line, or may be provided by being recorded in a non-transitory recording medium such as a memory card, an optical disk, or a hard disk drive readable by the computer system. The processor of the computer system is composed of one or more electronic circuits including a semiconductor integrated circuit (IC) or a large-scale integrated circuit (LSI). The integrated circuit such as an IC or an LSI herein is called differently depending on the degree of integration, and includes an integrated circuit called a system LSI, a very large scale integration (VLSI), or an ultra large scale integration (ULSI). Furthermore, a field-programmable gate array (FPGA) programmed after the manufacture of the LSI or a logic device which can be reconfigured with respect to a bonding relationship inside the LSI or with respect to a circuit section inside the LSI can also be employed as the processor. The plurality of electronic circuits may be integrated into one chip, or may be provided in a distributed manner on a plurality of chips. The plurality of chips may be aggregated in one device or may be provided in a distributed manner in a plurality of devices. The computer system herein includes a microcontroller having one or more processors and one or more memories. Therefore, the microcontroller is also constituted by one or more electronic circuits including a semiconductor integrated circuit or a large-scale integrated circuit.

It is not an essential configuration that the plurality of functions of motor drive device 1 are integrated in one housing (housing H1) as in the above-described exemplary embodiment and the first modification. For example, the components of motor drive device 1 may be distributed in a plurality of housings.

Conversely, the plurality of functions of motor drive device 1 may be integrated in one housing as in the above exemplary embodiment and the first modification. Furthermore, at least some of the functions of motor drive device 1, for example, some of the functions of motor drive device 1 may be achieved by cloud computing or the like.

The configuration of DB 14 described in the above exemplary embodiment (see Fig. 1) is merely an example, and the type and number of resistors (14a to 14c), the type and number of switches (14d, 14e), the connection relationship of the wiring, and the like of DB 14 are not particularly limited. In short, the configuration is not limited as long as it includes a component (resistor or the like) that generates heat by the operation of DB 14 and is required to be cooled by second motor 5 in order to maintain the stability of motor drive device 1. For example, resistors (14a to 14c) may include variable resistors.

In the above-described exemplary embodiment and the first modification, second motor 5 is controlled to maintain a constant rotation speed while first motor 2 is controlled to be in the driving state, as illustrated in Figs. 2 and 3. However, even in the driving state, motor drive device 1 may control the target rotation speed of second motor 5 to change according to, for example, the rotation speed of first motor 2.

### (Conclusion)

The following aspects are disclosed from the above-described exemplary embodiment and the like.

Motor drive device (1) according to a first aspect includes heat generator (A1), first controller (11), second controller (12), and dynamic brake (14) in an inside of motor drive device (1). Heat generator (A1) generates heat due to rotation of first motor (2). First controller (11) drives and controls first motor (2). Second controller (12) drives and controls second motor (5). Second motor (5) cools the inside. Dynamic brake (14) includes resistors (14a to 14c) electrically connected among terminals (P1 to P3) of first motor (2). Dynamic brake (14) short-circuits terminals (P1 to P3) to cause resistors (14a to 14c) to consume heat of kinetic energy of first motor (2) to stop first motor (2). While first motor (2) is controlled to be in the standby state, second controller (12) controls the rotation speed of second motor (5) to change according to the rotation speed of first motor (2). Heat generator (A1) includes resistors (14a to 14c).

According to the aspect described above, the rotation speed of second motor (5) is changed according to the rotation speed of first motor (2), while first motor (2) is controlled to be in the standby state. Therefore, even when first motor (2) is rotated by an external force and resistors (14a to 14c) generate heat, heat generator (A1) including resistors (14a to 14c) is likely to be appropriately cooled by second motor (5). As a result, motor drive device (1) provides an advantage that a decrease in reliability due to heat generated by the operation of dynamic brake (14) can be prevented.

With respect to motor drive device (1) according to a second aspect, second controller (12) includes heat-generation estimation part (121) that estimates a calorific value of resistors (14a to 14c) on the basis of the rotation speed of first motor (2) in the first aspect. Second controller (12) changes the rotation speed of second motor (5) according to the calorific value of resistors (14a to 14c) estimated by heat-generation estimation part (121).

According to the above aspect, the rotation speed of second motor (5) is changed according to the calorific value of resistors (14a to 14c), so that second motor (5) can be driven and controlled more reliably.

Motor drive device (1) according to a third aspect further includes storage (13) in the second aspect. Storage (13) stores reference information indicating a correspondence relationship of a plurality of target rotation speeds related to second motor (5) with respect to a plurality of rotation speeds related to first motor (2) and a plurality of calorific values related to resistors (14a to 14c). That is, while first motor (2) is controlled to be in the standby state, second controller (12) determines one from the plurality of target rotation speeds of the reference information according to the calorific value of resistors (14a to 14c) estimated by heat-generation estimation part (121), and applies the one as the rotation speed of second motor (5).

According to the above aspect, one of the plurality of target rotation speeds of the reference information is determined to be applied as the rotation speed of second motor (5), so that second motor (5) can be driven and controlled more reliably.

With respect to motor drive device (1) according to a fourth aspect, second controller (12) maintains the rotation speed of second motor (5) for a certain period of time (T1) even after the rotation speed of first motor (2) falls below a predetermined threshold while first motor (2) is controlled to be in the standby state in the third aspect. Second controller (12) changes the rotation speed of second motor (5) on the basis of the reference information after the lapse of certain period of time (T1).

According to the above aspect, heat generator (A1) including resistors (14a to 14c) or heat radiator (B1) is likely to be sufficiently cooled by second motor (5). In addition, the rotation speed of second motor (5) is prevented from being frequently switched due to noise or the like while first motor (2) is rotating at a rotation speed near the predetermined threshold.

Motor drive device (1) according to a fifth aspect further includes housing (H1) and temperature detector (4) in any one of the second to fourth aspects. Housing (H1) accommodates at least the first controller, second controller (12), and dynamic brake (14). Temperature detector (4) is disposed in housing (H1). Specifically, while first motor (2) is controlled to be in the standby state, second controller (12) changes the rotation speed of second motor (5) according to the calorific value of resistors (14a to 14c) estimated by heat-generation estimation part (121) and the result of detection by temperature detector (4).

According to the above aspect, the rotation speed of second motor (5) is changed according to the calorific value of resistors (14a to 14c) and the result of detection by temperature detector (4), so that second motor (5) can be driven and controlled more reliably.

With respect to motor drive device (1) according to a sixth aspect, second controller (12) includes temperature estimation part (122) that estimates an ambient temperature of housing (H1) on the basis of the result of detection by temperature detector (4) in the fifth aspect. While first motor (2) is controlled to be in the standby state, second controller (12) changes the rotation speed of second motor (5) according to the calorific value of resistors (14a to 14c) estimated by heat-generation estimation part (121) and the ambient temperature estimated by temperature estimation part (122).

According to the above aspect, the rotation speed of second motor (5) is changed using the estimated ambient temperature of housing (H1), so that second motor (5) can be driven and controlled more reliably.

With respect to motor drive device (1) according to a seventh aspect, second controller (12) controls second motor (5) at a predetermined rotation speed after first motor (2) is controlled to be changed from the standby state to a driving state in any one of the first to sixth aspects. Second controller (12) controls the rotation speed of second motor (5) to be maintained at a predetermined rotation speed for specified period of time (T2) even after first motor (2) is controlled to be changed from the driving state to the standby state. After the lapse of specified period of time (T2), second controller (12) controls the rotation speed of second motor (5) to change according to the rotation speed of first motor (2).

According to the above aspect, the control system regarding the rotation speed of second motor (5) is switched after the heat of heat generator (A1) in the driving state is more sufficiently cooled, so that the reliability of motor drive device (1) is further improved.

With respect to motor drive device (1) according to an eighth aspect, heat radiator (B1) that radiates heat of heat generator (A1) is further included, and at least one of heat generator (A1) and heat radiator (B1) is caused to radiate heat in the first aspect.

According to the above aspect, heat radiator (B1) is likely to be appropriately cooled by second motor (5). As a result, motor drive device (1) provides an advantage that a decrease in reliability due to heat generated by the operation of dynamic brake (14) can be prevented.

A control method according to a ninth aspect is a method for controlling motor drive device (1). The control method includes a first control step, a second control step, and a stop control step. In the first control step, first motor (2) is driven and controlled. In the second control step, second motor (5) is driven and controlled. Second motor (5) cools at least one of heat generator (A1) that generates heat due to rotation of first motor (2) and heat radiator (B1) that radiates the heat of heat generator (A1). In the stop control step, dynamic brake (14), which includes resistors (14a to 14c) electrically connected among terminals (P1 to P3) of first motor (2), short-circuits terminals (P1 to P3). In the stop control step, the short circuit causes resistors (14a to 14c) to consume heat of the kinetic energy of first motor (2) and thereby first motor (2) is stopped. In the second control step, while first motor (2) is controlled to be in the standby state, the rotation speed of second motor (5) is controlled to change according to the rotation speed of first motor (2). Heat generator (A1) includes resistors (14a to 14c).

According to the above aspect, it is possible to provide the control method capable of preventing a decrease in reliability due to heat generated by the operation of dynamic brake (14).

A program according to a tenth aspect is a program for causing one or more processors to execute the control method described above.

According to the above aspect, it is possible to provide a function of preventing a decrease in reliability due to heat generated by the operation of dynamic brake (14).

The configurations according to the second to seventh aspects are not essential to motor drive device (1), and can be omitted as appropriate.

### INDUSTRIAL APPLICABILITY

According to the motor drive device, the control method, and the program of the present disclosure, it is possible to prevent a decrease in reliability due to heat generated by operation of the dynamic brake. As described above, the motor drive device, the control method, and the program of the present disclosure are industrially useful.

### REFERENCE MARKS IN THE DRAWINGS

- 1: motor drive device
- 11: first controller
- 12: second controller
- 121: heat-generation estimation part
- 122: temperature estimation part
- 14: dynamic brake
- 14a: first resistor (resistor)
- 14b: second resistor (resistor)
- 14c: third resistor (resistor)
- 2: first motor
- 4: temperature detector
- 5: second motor
- A1: heat generator
- B1: heat radiator
- H1: housing
- P1: first terminal (terminal)
- P2: second terminal (terminal)
- P3: third terminal (terminal)
- T1: certain period of time
- T2: specified period of time

## Claims

1. A motor drive device comprising:
a heat generator that is provided in an inside of the motor drive device and generates heat due to rotation of a first motor;
a first controller that is provided in the inside and is configured to drive and control the first motor;
a second controller that is provided in the inside and is configured to drive and control a second motor that cools the inside; and
a dynamic brake that is provided in the inside and includes a resistor electrically connected between terminals of the first motor, the dynamic brake being configured to short-circuit the terminals to cause the resistor to consume heat of kinetic energy of the first motor to stop the first motor,
wherein the second controller controls a rotation speed of the second motor to change according to a rotation speed of the first motor while the first motor is controlled to be in a standby state, and
the heat generator includes the resistor.

2. The motor drive device according to Claim 1, wherein
the second controller includes a heat-generation estimation part that estimates a calorific value of the resistor based on the rotation speed of the first motor, and
the second controller changes the rotation speed of the second motor according to the calorific value of the resistor estimated by the heat-generation estimation part.

3. The motor drive device according to Claim 2, further comprising a storage that stores reference information indicating a correspondence relationship of a plurality of target rotation speeds related to the second motor with respect to a plurality of rotation speeds related to the first motor and a plurality of calorific values related to the resistor,
wherein while the first motor is controlled to be in the standby state, the second controller determines one of the plurality of target rotation speeds of the reference information according to the calorific value of the resistor estimated by the heat-generation estimation part, and applies the one as the rotation speed of the second motor.

4. The motor drive device according to Claim 3, wherein while the first motor is controlled to be in the standby state, the second controller maintains the rotation speed of the second motor for a certain period of time even after the rotation speed of the first motor falls below a predetermined threshold, and changes the rotation speed of the second motor based on the reference information after the certain period of time has elapsed.

5. The motor drive device according to Claim 2, further comprising:
a housing that accommodates at least the first controller, the second controller, and the dynamic brake; and
a temperature detector disposed in the housing,
wherein while the first motor is controlled to be in the standby state, the second controller changes the rotation speed of the second motor according to the calorific value of the resistor estimated by the heat-generation estimation part and a result of detection by the temperature detector.

6. The motor drive device according to Claim 5, wherein
the second controller includes a temperature estimation part that estimates an ambient temperature of the housing based on the result of detection by the temperature detector, and
while the first motor is controlled to be in the standby state, the second controller changes the rotation speed of the second motor according to the calorific value of the resistor estimated by the heat-generation estimation part and the ambient temperature estimated by the temperature estimation part.

7. The motor drive device according to Claim 1, wherein
the second controller
controls the second motor at a predetermined rotation speed after the first motor is controlled to be changed from the standby state to a driving state, and
controls the rotation speed of the second motor to be maintained at the predetermined rotation speed for a specified period of time even after the first motor is controlled to be changed from the driving state to the standby state, and controls the rotation speed of the second motor to be changed according to the rotation speed of the first motor after the specified period of time has elapsed.

8. The motor drive device according to Claim 1, further comprising a heat radiator that radiates the heat of the heat generator,
wherein the second motor causes at least one of the heat generator and the heat radiator to radiate heat.

9. A method for controlling a motor drive device, the method comprising:
a first control step of driving and controlling a first motor;
a second control step of driving and controlling a second motor for cooling at least one of a heat generator that generates heat due to rotation of the first motor and a heat radiator that radiates the heat of the heat generator; and
a stop control step of stopping the first motor by causing a dynamic brake that includes a resistor electrically connected between terminals of the first motor to short-circuit the terminals to cause heat of kinetic energy of the first motor to be consumed by the resistor,
wherein in the second control step, while the first motor is controlled to be in a standby state, a rotation speed of the second motor is controlled to change according to a rotation speed of the first motor, and
the heat generator includes the resistor.

10. A program for causing one or more processors to execute the method according to Claim 8.
